# EUROPÄISCHE PATENTSCHRIFT

(11) **EP 2 399 016 B1**
(45) Veröffentlichungstag und Bekanntmachung des Hinweises auf die Patenterteilung: **21.11.2012**
(21) Anmeldenummer: 10700511.8
(22) Anmeldetag: 05.01.2010
(51) Int. Cl.: F02D 41/20, H01L 41/04

(54) **VERFAHREN ZUM BETREIBEN EINER ENDSTUFE FÜR MINDESTENS EINEN PIEZOAKTOR**
METHOD FOR OPERATING A FINAL STAGE FOR AT LEAST ONE PIEZOACTUATOR
PROCÉDÉ DE FONCTIONNEMENT D'UN ÉTAGE FINAL POUR AU MOINS UN PIÉZOACTIONNEUR

(30) Priorität: 23.02.2009 DE 102009001077
(43) Veröffentlichungstag der Anmeldung: 28.12.2011
(73) Patentinhaber: Robert Bosch GmbH, 70442 Stuttgart (DE)
(72) Erfinder: FUCHS, Stefan, 70469 Stuttgart (DE); GRAF, Marco, 71254 Ditzingen (DE)
(86) Internationale Anmeldenummer: PCT/EP2010/050034
(87) Internationale Veröffentlichungsnummer: WO 2010/094516

(56) Entgegenhaltungen:
- EP-A1- 1 923 559
- WO-A1-99/17009
- US-A1- 2007 290 573

## Beschreibung

Die Erfindung betrifft ein Verfahren zum Betreiben einer Endstufe für mindestens einen Piezoaktor, eine Anordnung zum Betreiben einer Endstufe für mindestens einen Piezoaktor, ein Computerprogramm und ein Computerprogrammprodukt.

### Stand der Technik

In Steuergeräten für sog. Speichereinspritzungs- bzw. Common-Rail- oder CR-Piezo Systeme (DS) und Benzindirekteinspritz- bzw. BDE-Piezo Systeme (GS), die Piezoaktoren zum Beaufschlagen von Zylindern umfassen, wird auf Grundlage von systembedingten Anforderungen einer Zylinder-Auswahl (Zylinder-Select) zu unterschiedlichen Zeitpunkten am Ende eines Lade- bzw. Entladevorgangs ausgeschaltet. Bei BDE-Piezo Systemen wird die Zylinder-Auswahl exakt nach dem Ende der Lade- bzw. Entladezeit ausgeschaltet. Das erfolgt unabhängig davon, ob zu diesem Zeitpunkt noch Energie in einer Transferinduktivität einer Piezoendstufe vorhanden ist. Bei CR-Piezo Systemen wird nach dem Erreichen des Abschaltkriteriums, das durch die Zeit beim Laden und die Spannung beim Entladen bestimmt ist, die Zylinder-Auswahl erst ausgeschaltet, sobald in der Transferinduktivität nahezu keine Energie mehr vorhanden ist. Für BDE-Piezo Systeme ist üblicherweise bei Ansteuerungen vorgesehen, dass auf den Piezoaktor eine Ladung linear aufgebracht wird. Die Zylinder-Auswahl wird hierzu sofort nach dem Erreichen des Abschaltkriteriums, z. B. der Ladezeit, abgeschaltet, was jedoch für das Einhalten der Anforderungen bezüglich elektromagnetischer Verträglichkeit (EMV) einer Endstufe eines Steuergeräts ungünstig ist.

Aus der Druckschrift DE 10 2007 014 326 sind ein Verfahren und eine Vorrichtung zum Laden eines kapazitiven Elements bekannt.

### Offenbarung der Erfindung

Die Erfindung betrifft ein Verfahren zum Betreiben einer Endstufe für mindestens einen Piezoaktor, der einem Zylinder zugeordnet und zum Antreiben eines Ventilelements dieses Zylinders ausgebildet ist. Bei dem Verfahren wird während einer Betriebsphase bei Unterschreiten eines durch den Piezoaktor fließenden Stroms unter einen Sollstrom überprüft, ob ein Zeitpunkt für das Unterschreiten außerhalb oder innerhalb eines Zeitfensters liegt. In Abhängigkeit davon, ob der Zeitpunkt bzgl. seiner Lage und/oder seines Beginns innerhalb eines typischerweise definierten Zeitfensters liegt, wird ein Kriterium für ein Ende der Betriebsphase bereitgestellt. Falls sich der Zeitpunkt außerhalb des Zeitfensters befindet, wird die Betriebsphase fortgesetzt und ein nachfolgender Strompuls bzw. Stromimpuls über den Sollstrom gesteuert. Der nachfolgende Strompuls wird alternativ über eine Einschaltzeit gesteuert, falls sich der Zeitpunkt innerhalb des Zeitfensters befindet. In diesem Fall wird die aktuelle Betriebsphase beendet, so dass eine neue Betriebsphase beginnen kann, bei der typischerweise ein neuer Sollstrom bereitgestellt wird. Die Anzahl der Strompulse hängt natürlich vom gewählten Betriebspunkt ab.

Unabhängig davon, wann die Betriebsphase beendet wird, wird dem Piezoaktor mit dem Strom eine Ladung linear aufgebracht. Falls sich der Zeitpunkt innerhalb des Zeitfensters befindet und ein üblicherweise zeitgesteuerter Strompuls bei Unterschreiten der Nullstromgrenze beendet wird, ist es auch möglich, dass ein Rückmeldesignal ausgeschaltet wird. Weiterhin kann ein Zylinder-Select-Schalter analog zu diesem Rückmeldesignal geschaltet werden. Dabei können eventuell auch mehrere zeitgesteuerte Strompulse, deren Anzahl fest definiert werden kann, abgesetzt werden. Außerdem kann in der nachfolgenden Betriebsphase ein weiterer Piezoaktor, der einem weiteren Zylinder zugeordnet ist, bestromt werden.

Das Zeitfenster liegt üblicherweise am Ende einer Betriebszeit der Betriebsphase. Das Zeitfenster weist abhängig von einer Länge der Betriebsphase eine Länge von 0 bis 25 µs auf.

Die Einschaltzeit ist in einer Variante von einem Zeitintervall abhängig, das durch den Zeitpunkt für das Unterschreiten des Zeitfensters und dem Ende des Zeitfensters bzw. einem Zeitpunkt, bei dem das Zeitfenster in der Regel beendet ist, festgelegt wird.

Die Länge des Zeitfensters wird einer anwendungsspezifischen integrierten Schaltung, die innerhalb eines Steuergeräts angeordnet sein kann, über eine serielle periphere Schnittstelle vorgegeben.

Das Verfahren kann für eine als Ladephase ausgebildete Betriebsphase, bei der der Piezoaktor geladen wird und/oder für eine als Entladephase ausgebildete Betriebsphase, bei der der Piezoaktor entladen wird, durchgeführt werden.

Die Erfindung betrifft weiterhin eine Anordnung zum Betreiben einer Endstufe für mindestens einen Piezoaktor. Dabei ist die Anordnung dazu ausgebildet, während einer Betriebsphase der Endstufe einen dem Piezoaktor bereitgestellten Strom zu messen und zu überprüfen, zu welchem Zeitpunkt der Strom einen Sollstrom unterschreitet und ob dieser Zeitpunkt außerhalb oder innerhalb eines Zeitfensters liegt. Die Anordnung ist auch dazu ausgebildet, die Betriebsphase fortzusetzen und einen nachfolgenden Strompuls bzw. Stromimpuls über den Sollstrom zu steuern, falls sich der Zeitpunkt außerhalb des Zeitfensters befindet. Außerdem ist die Anordnung dazu ausgebildet, den nachfolgenden Strompuls alternativ über eine Einschaltzeit zu steuern, falls sich der Zeitpunkt innerhalb des Zeitfensters befindet.

Die Anordnung kann mindestens ein Messmodul zum Messen des Stroms, mindestens ein Prüfmodul zum überprüfen, ob der Zeitpunkt innerhalb oder außerhalb des Fensters liegt sowie mindestens ein Schaltmodul zum stromgesteuerten oder zeitgesteuerten Schalten des Stroms und somit des Strompulses aufweisen.

Die beschriebene Anordnung ist dazu ausgebildet, sämtliche Schritte des vorgestellten Verfahrens durchzuführen. Dabei können einzelne Schritte dieses Verfahrens auch von einzelnen Modulen der Anordnung durchgeführt werden. Weiterhin können Funktionen der Anordnung oder Funktionen von einzelnen Modulen der Anordnung als Schritte des Verfahrens umgesetzt werden. Außerdem ist es möglich, dass Schritte des Verfahrens als Funktionen einzelner Module der Anordnung oder der gesamten Anordnung realisiert werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Anordnung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einer erfindungsgemäßen Anordnung, ausgeführt wird.

Mit der Erfindung werden die Vorgehensweisen, die bei Speichereinspritzungs-Piezo Systemen (DS) und Benzindirekteinspritz-Piezo Systemen (GS) zur Anwendung kommen, kombiniert, so dass ein Zylinder-Timing bzw. eine zeitliche Steuerung zur Beaufschlagung von Zylindern eines Verbrennungsmotors mit Piezoaktoren umgesetzt werden kann. Es ist dabei u. a. möglich, eine lineare Aufbringung der Ladung auf den Piezoaktor bereitzustellen, ohne dabei das Verhalten bzgl. der elektromagnetischen Verträglichkeit durch eine hohe Restenergie in einer bspw. als Drossel ausgebildeten Transferinduktivität des Piezoaktors negativ zu beeinflussen.

Bei einer Ausführung des Verfahrens wird während mindestens einer Betriebsphase, bei der es sich um die Lade- und/oder Entladephase handeln kann, bei jedem Unterschreiten der Stromgrenze für einen Sollstrom Iₛₒₗₗ geprüft, ob der Zeitpunkt innerhalb eines definierten Zeitfensters "T_Fenster" liegt. Das Zeitfenster liegt üblicherweise am Ende der Lade- bzw. Entladephase und wird über eine serielle periphere Schnittstelle (SPI) einer anwendungsspezifischen integrierten Schaltung (ASIC, Application Specific Integrated Circuit) der Endstufen vorgegeben. Das Fenster kann für seine Länge z. B. einen Wert im Bereich von 0 bis 25 µs aufweisen, was üblicherweise circa 10 %, maximal bis zu 25 % einer gesamten Länge des Betriebszyklus, der in der Regel zwischen 100 µs... 200 µs andauern kann, entspricht. Üblicherweise weist der für den Piezoaktor vorgesehene Strom ein weitgehend zickzackförmiges Profil auf, so dass der Strom während einer der genannten Betriebsphasen die Grenzen für den Sollstrom I_{Soll} ggf. mehrmals unterschreiten kann, bis der Zeitpunkt für das Unterschreiten des Sollstroms innerhalb des Zeitfensters erreicht ist.

Ist zum Überprüfungszeitpunkt das Zeitfenster noch nicht erreicht, so wird der nachfolgende Strompuls, wie zuvor durchgeführt, über den Sollstrom Iₛₒₗₗ gesteuert. Sobald sich der Überprüfungszeitpunkt innerhalb des Zeitfensters befindet, wird der nachfolgende Strompuls über die Einschaltzeit gesteuert. Die Einschaltzeit ist u. a. von der Zeitdauer abhängig, die sich von dem Zeitpunkt, ab der die Stromgrenze für den Sollstrom Iₛₒₗₗ unterschritten wird, bis zum Ende des Zeitfensters erstreckt, was zugleich einem Ende der Lade- bzw. Entladeflanke entspricht. Je weiter der Zeitpunkt für ein Unterschreiten des Sollstroms Iₛₒₗₗ vom Ende des Zeitfensters "T_Fenster" entfernt liegt, umso länger wird die Einschaltzeit, so dass die Einschaltzeit zu der genannten Zeitdauer proportional sein kann.

Durch diese Maßnahme ergibt sich, dass sich mit einer längeren oder kürzeren Ladezeit bzw. Entladezeit eine entsprechend größere oder kleinere Ladung auf dem Piezoaktor einstellt und gleichzeitig der Zylinder-Select-Schalter analog zum Rückmeldesignal immer erst bei einer definiert kleinen Restenergie in der Transferinduktivität bzw. der Drossel zur Beaufschlagung des Piezoaktors ausgeschaltet wird. Bei der bisherigen Lösung für Speichereinspritzungs-Piezo Systemen ergibt sich abhängig von dem Zeitpunkt, der ein Ende der Lade- bzw. Entladezeit festlegt, und dem Stromverlauf, üblicherweise in Abhängigkeit des Zeitpunkts, zu dem der Sollstrom Iₛₒₗₗ überschritten und eine Nullstromgrenze noch nicht unterschritten ist, ein sog. Totzeitpunkt, während dem die aufgebrachte Ladung zum vorangegangenen Arbeitspunkt trotz verlängerter oder verkürzter Lade- bzw. Entladezeit nicht verändert wird. Dies führt zu einem nichtlinearen Zusammenhang zwischen der Lade- bzw. Entladezeit und der aufgebrachten bzw. abgeführten Ladung.

Das Verfahren kann bspw. in einem Schaltkreis (ASIC) für eine DGS Piezo-Endstufe realisiert und weiterhin in allen DS-Piezo-Anlagen für Speichereinspritzung und GS-Piezo-Anlagen für Benzindirekteinspritzungen eingesetzt werden.

Weitere Vorteile und Ausgestaltungen der Efindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Beispiele aus dem Stand der Technik Finden sich in US 2007/290573, EP1923559 und WO99/17009.

### Kurze Beschreibung der Zeichnungen

Figur 1 zeigt in schematischer Darstellung ein Diagramm mit Betriebsparametern, die bei Betrieb einer Speichereinspritzungs-Piezoanordnung (DS) auftreten.
Figur 2 zeigt in schematischer Darstellung ein Diagramm mit Betriebsparametern, die sich beim Betrieb einer Benzindirekteinspritz-Piezovorrichtung (GS) ergeben.
Figur 3 zeigt ein Diagramm für Betriebsparameter, die sich bei Umsetzung einer Ausführungsform des erfindungsgemäßen Verfahrens für eine Ausführungsform einer erfindungsgemäßen Anordnung ergeben.
Figur 4 zeigt in schematischer Darstellung eine Ausführungsform einer erfindungsgemäßen Anordnung.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben

Die Figuren werden zusammenhängend und übergreifend beschrieben, gleiche Bezugszeichen bezeichnen gleiche Komponenten.

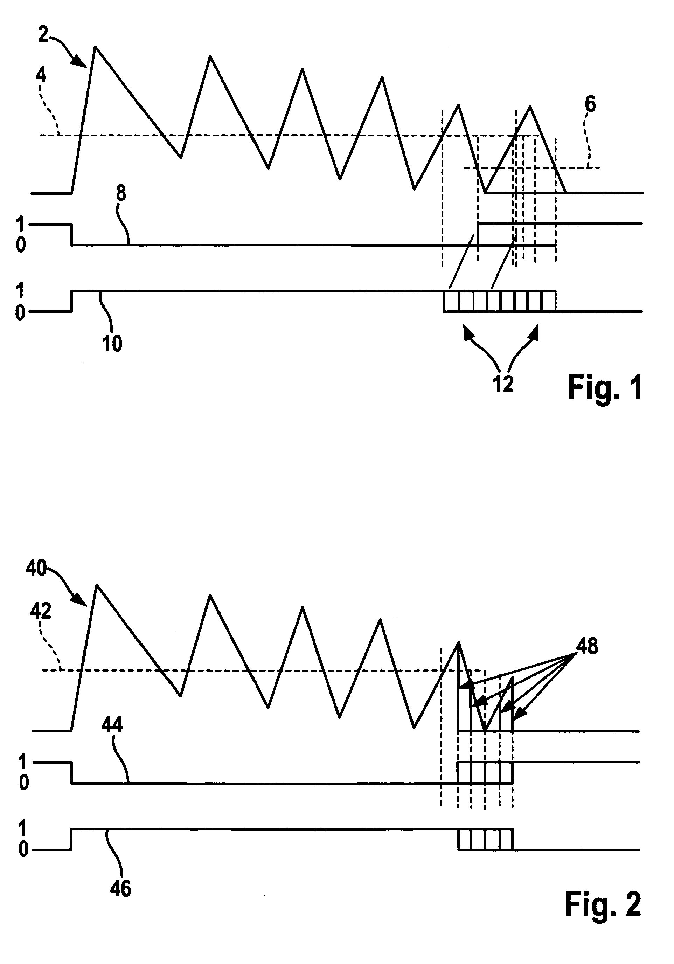

Figur 1 zeigt in schematischer Darstellung ein Diagramm mit Betriebsparametern für ein Beispiel für eine Speichereinspritz-Piezo Vorrichtung (CY 372 mit PCP2 der Robert Bosch GmbH) mit mehreren übereinander gelegten Kurven für einen Strom 2, die sich durch den letzten Strompuls unterscheiden, bezüglich eines Sollstroms 4 und einer Nullstromgrenze 6. Weiterhin sind in Figur 1 jeweils mehrere Kurven für Rückmeldesignale 8 und Steuersignale 10 dargestellt. Ein Steuersignal 10 kann verschiedene Längen aufweisen, die innerhalb des Diagramms aus Figur 1 durch die unterschiedlich gestrichelte Linien für mögliche Enden 12 des Steuersignals 10 dargestellt sind. Dabei wird einem Piezoaktor der Strom 2 bereitgestellt, falls sich das Steuersignal 10 auf dem Wert 1 befindet, ein entsprechendes Rückmeldesignal 8 ist dann auf dem Wert 0. Eine Richtung des Rückmeldesignals 8 und des Steuersignals 10 kann auch umgekehrt sein. Hier ist das Rückmeldesignal 8 "low-aktiv", was bedeutet, dass das Rückmeldesignal 8 aktiv ist, wenn es den Wert 0 aufweist, und dass es nicht aktiv ist, wenn es den Wert 1 aufweist. Das Steuersignal 10 ist dagegen "high-aktiv", demnach ist das Steuersignal 10 aktiv, wenn es den Wert 1 aufweist, und nicht aktiv, wenn es den Wert 0 aufweist. Mit der fallenden Flanke des Steuersignals 10 wird die Ladephase bzw. Entladephase nicht sofort beendet. Ein letzter Strompuls wird noch ausgeführt bis die Nullstromgrenze 6 unterschritten ist und somit das Rückmeldesignal 8 eine steigende Flanke ausgibt. Durch das Rückmeldesignal 8 wird eine Rückmeldung an einen Controller bereitgestellt. Das Steuersignal 10 definiert die Dauer einer Betriebsphase, in der Regel einer Ladephase und/oder einer Entladephase. Das Rückmeldesignal 8 meldet die tatsächliche Dauer an eine Steuereinrichtung (Controller) zurück.

Durch diese Maßnahme wird das Verhalten hinsichtlich der elektromagnetischen Verträglichkeit begünstigt, da das Rückmeldesignal 8 erst abgeschaltet und somit auch der Zylinder-Select-Schalter ausgeschalter wird, sobald der Strom 2 die Nullstromgrenze 6 unterschritten hat und somit nahezu den Wert 0 erreicht hat. Außerdem ist ein nichtlinearer Zusammenhang zwischen der Lade- bzw. Entladezeit und einer aufgebrachten bzw. abgeführten Ladung durch einen Totzeitpunkt, während dem der Sollstrom 4 Iₛₒₗₗ bei einem letzten Strompuls überschritten und die Nullstromgrenze 6 noch nicht erreicht ist, gegeben. Eine Bedingung für die Totzeit ist, dass der Sollstrom 4 Iₛₒₗₗ überschritten ist und die Nullstromgrenze noch nicht unterschritten ist. Bei manchen gestrichelten Steuersignalen 10 mit unterschiedlichen Enden 12 verändert sich der Stromverlauf nicht, d. h. hier ergibt sich keine Änderungen der Ladung.

Figur 2 zeigt in schematischer Darstellung ein Diagramm mit Betriebsparametern für ein Beispiel für eine Benzindirekteinspritz-Piezo Vorrichtung (GS Piezo-Endstufe und CJ 870) mit einem Stromverlauf 40 bzgl. eines Sollstroms 42 I_{Soll}, Kurven für ein Rückmeldesignal 44 und ein Steuersignal 46, wobei ein Piezoaktor geladen wird, falls sich das Steuersignal 46 auf dem Niveau 1 befindet, und wobei keine Ladung erfolgt, falls sich das Steuersignal 46 auf dem Niveau 0 befindet. Die hier gezeigten Steuersignale 46 beginnen zu demselben Zeitpunkt und enden zu unterschiedlichen Zeitpunkten. Falls eine Kurve für ein Steuersignal den Wert 1 bzw. 0 aufweist, weist ein zugeordnetes Rückmeldesignal 44 den Wert 0 bzw. 1 auf. In dem Diagramm sind verschiedene Öffnungszeitpunkte 48 für das Rückmeldesignal 44 angedeutet.

Dabei ergibt sich eine lineare Ladungsaufbringung in Abhängigkeit der Lade- bzw. Entladezeit. Das Rückmeldesignal 44 wird sofort nach Erreichen der Lade- bzw. Entladezeit zum Öffnungszeitpunkt 48 auf nicht aktiv gesetzt und gleichzeitig der Zylinder-Select-Schalter geöffnet. Je nach Abschaltzeitpunkt kann noch Restenergie in der Transferinduktivität vorhanden sein. Dies führt zu Spannungssprüngen an Highside-Leitungen des Piezoaktors, die einem Injektor zugeordnet sind, was sich negativ auf die elektromagnetische Verträglichkeit auswirkt.

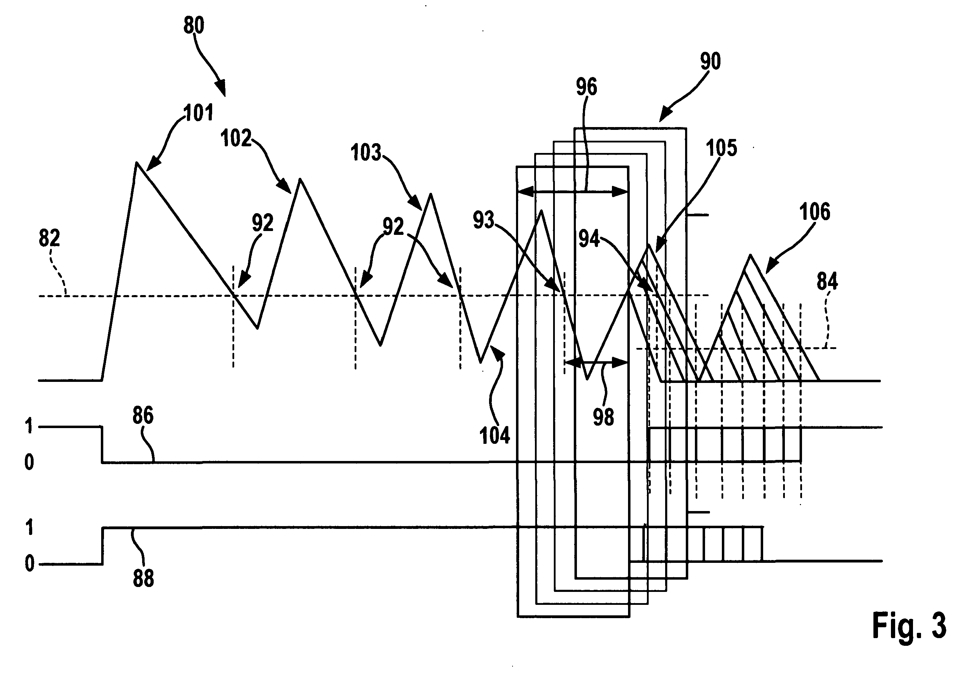

Figur 3 zeigt in schematischer Darstellung ein Diagramm für eine mögliche Ausführungsform des erfindungsgemäßen Verfahrens zur Umsetzung eines Zylinder-Timings bzw. einer zeitlichen Steuerung eines Zylinders.

In dem Diagramm aus Figur 3 sind mehrere Kurven für einen in diesem Fall gepulsten bzw. getakteten Verlauf eines Stroms 80 für einen Piezoaktor bzgl. eines Sollstroms I_{Soll} 82 und einer Nullstromgrenze 84 übereinander gelegt dargestellt. Dabei sind in dem Diagramm bei den ersten Vorgängen (kurze Steuersignale 88) für den Verlauf des Stroms 80 fünf Strompulse 101, 102, 103, 104, 105 angedeutet, die verschiedenen Vorgänge unterscheiden sich in der Länge des Strompulses 105 (dieser wird durch unterschiedliche lange Einschaltzeiten gesteuert: mit zunehmender Länge des Steuersignales 88 nimmt die Einschaltzeit zu). Sobald der Überprüfungszeit 93 vom Strompuls 105 außerhalb des Zeitfensters fällt, kommt ein zusätzlicher Strompuls 106 hinzu. Hier unterscheiden sich die Vorgänge jetzt durch den letzten Strompuls 106. Sobald der Strompuls 106 außerhalb des Zeitfensters fällt, dann wiederholt sich der vorangegangen Ablauf: Es kommt eine weiterer Strompuls hinzu. Das ganze wiederholt sich solange, bis das Steuersignal den Vorgang beendet und ein letzter zeitgesteuerter Strompuls beendet ist. Die Anzahl der Strompulse hängt von der Länge des Steuersignales 88 und der Sollstromgrenze 82 ab.

Das Diagramm aus Figur 3 umfasst außerdem Kurven für ein Rückmeldesignal 86 und Steuersignal 88. Hierbei ist jeweils einem Steuersignal 88 ein Rückmeldesignal 86 und ein Strom 80 zugeordnet. Falls ein Steuersignal 88 den Wert 1 aufweist, weist ein zugeordnetes Rückmeldesignal 86 den Wert 0 auf. Falls ein Rückmeldesignal 86 den Wert 1 aufweist, weist das zugeordnete Steuersignal 88 den Wert 0 auf. Eine Richtung des Rückmeldesignals 86 und des Steuersignals 88 kann auch umgekehrt sein. Hier ist das Rückmeldesignal 86 "low-aktiv", was bedeutet, dass das Rückmeldesignal 86 aktiv ist, wenn es den Wert 0 aufweist, und dass es nicht aktiv ist, wenn es den Wert 1 aufweist. Das Steuersignal 88 ist dagegen "high-aktiv", demnach ist das Steuersignal 88 aktiv, wenn es den Wert 1 aufweist, und nicht aktiv, wenn es den Wert 0 aufweist. Weiterhin sind in dem Diagramm aus Figur 3 Zeitfenster 90 (T_Fenster), die zu unterschiedlichen Zeitpunkten beginnen, dargestellt, wobei jeweils nur eines der dargestellten Zeitfenster 90 aktiv ist. In diesem Diagramm sind mehrere Ladeflanken für Zeitfenster 90 übereinander dargestellt. Jede Ladeflanke weist ein Zeitfenster 90 und unterschiedlich lange Flankendauern auf.

Für den hier gepulsten bzw. getakteten Stromverlauf 80 wird während der Betriebsphase, bei der es sich um eine Lade- und/oder Entladephase des Piezoaktors handeln kann, zu mehreren Zeitpunkten 92, 93, 94 der Sollstrom Iₛₒₗₗ 82 unterschritten. Bei jedem Unterschreiten des Sollstroms Iₛₒₗₗ 82 wird überprüft, ob sich der Zeitpunkt innerhalb des für diesen Vorgang vorgegebenen Zeitfensters 90 mit einer durch den ersten Doppelpfeil 96 angedeuteten Länge befindet. Weiterhin ist durch den zweiten Doppelpfeil 98 ein Zeitintervall angedeutet, aus diesem Zeitintervall wird die Einschaltzeit für den zeitgesteuerten Strompuls ermittelt.

Bei den ersten Vorgängen (5 Strompuls ohne Strompuls 106) unterschreiten die ersten drei Strompulse 101, 102, 103 den Sollstrom 82 zu einem der ersten drei Zeitpunkte 92 außerhalb des Zeitfensters 90. In diesen Fällen wird ein nachfolgender, vierter Strompuls 104 durch die Stromregelung auf den Sollstrom Iₛₒₗₗ 82 bereitgestellt. Der vierte Strompuls 104 unterschreitet den Sollstrom Iₛₒₗₗ 82 zu einem vierten Zeitpunkt 93, der sich innerhalb des Zeitfensters 90 (T_Fenster) befindet, in diesem Fall wird ein nachfolgender, fünfter Strompuls 105 zeitgesteuert angehängt. Für diesen fünften Strompuls 105 findet keine Überprüfung mehr statt. Eine Auflösung der Einschaltzeit beträgt 125 ns bei einem Systemtakt von 8 MHz.

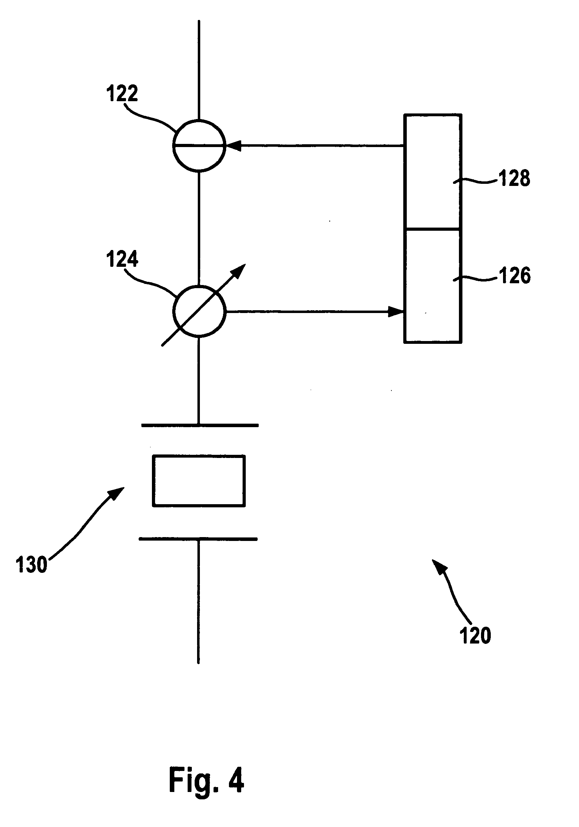

Eine Ausführungsform einer erfindungsgemäßen Anordnung 120 ist in Figur 4 dargestellt. Diese Anordnung umfasst eine Stromquelle 122, ein als Amperemeter ausgebildetes Messmodul 124, ein Prüfmodul 126 und ein Schaltmodul 128. Bei Betrieb eines Piezoaktors 130 wird diesem von der Stromquelle 122 Strom bereitgestellt. Bei einer aktuellen Betriebsphase, bei der es sich um eine Ladephase und/oder um eine Entladephase des Piezoaktors handeln kann, werden Werte dieses bereitgestellten Stroms durch das Messmodul 124 gemessen und dem Prüfmodul 126 bereitgestellt. Durch dieses Prüfmodul 126 wird überprüft, ob der Strom einen Sollstrom unterschreitet und ob ein Zeitpunkt für das Unterschreiten außerhalb oder innerhalb des vorgegebenen Zeitfensters liegt. Abhängig davon, ob der Zeitpunkt für das Unterschreiten innerhalb oder außerhalb des Zeitfensters liegt, wird ein zeitgesteuerter Strompuls angehängt und anschließend die aktuelle Betriebsphase beendet, falls sich der Zeitpunkt innerhalb des Zeitfensters befindet. Der Strom und somit ein nachfolgender Strompuls wird weiterhin über den Sollstrom gesteuert, falls sich der Zeitpunkt außerhalb des Zeitfensters befindet. In diesem Fall wird die aktuelle Betriebsphase fortgesetzt.

## Patentansprüche

1. Verfahren zum Betreiben einer Endstufe für mindestens einen Piezoaktor (130), bei dem während einer Betriebsphase bei Unterschreiten eines Stroms (80) für den Piezoaktor (130) unter einen Sollstrom (82) überprüft wird, ob ein Zeitpunkt (92, 93, 94) für das Unterschreiten außerhalb oder innerhalb eines Zeitfensters (90) liegt, wobei ein nachfolgender Strompuls (101, 102, 103, 104, 105, 106) über den Sollstrom (82) gesteuert wird, falls sich der Zeitpunkt (92, 93, 94) außerhalb des Zeitfensters (90) befindet, und wobei der nachfolgende Strompuls (101, 102, 103, 104, 105, 106) über eine Einschaltzeit gesteuert wird, falls sich der Zeitpunkt (92, 93, 94) innerhalb des Zeitfensters (90) befindet.

2. Verfahren nach Anspruch 1, bei dem dem Piezoaktor (130) mit dem Strom (80) eine Ladung linear aufgebracht wird.

3. Verfahren nach Anspruch 1 oder 2, bei dem ein Rückmeldesignal (86) ausgeschaltet und analog ein Zylinder-Select-Schalter ausgeschalt wird, falls sich der Zeitpunkt (92, 93, 94) innerhalb des Zeitfensters (90) befindet und ein zeitgesteuerter Strompuls (101, 102, 103, 104, 105, 106) bei Unterschreiten einer Nullstromgrenze (84) beendet wird, wobei eventuell auch mehrere zeitgesteuerte Strompulse, deren Anzahl fest definiert wird, abgesetzt werden können.

4. Verfahren nach einem der voranstehenden Ansprüche, bei dem das Zeitfenster (90) am Ende einer Betriebszeit der Betriebsphase liegt.

5. Verfahren nach einem der voranstehenden Ansprüche, bei dem die Einschaltzeit von einem Zeitintervall (98) abhängig ist, das durch den Zeitpunkt (92, 93, 94) für das Unterschreiten des Sollstromes (82) und dem Ende des Zeitfensters (90) festgelegt wird.

6. Verfahren nach einem der voranstehenden Ansprüche, bei dem eine Länge des Zeitfensters (90) einer anwendungsspezifischen integrierten Schaltung über eine serielle periphere Schnittstelle vorgegeben wird.

7. Verfahren nach einem der voranstehenden Ansprüche, das für eine als Ladephase ausgebildete Betriebsphase und/oder für eine als Entladephase ausgebildete Betriebsphase durchgeführt wird.

8. Anordnung zum Betreiben einer Endstufe für mindestens einen Piezoaktor (130), die dazu ausgebildet ist, während einer Betriebsphase der Endstufe einen Strom (80) für den Piezoaktor (130) zu messen, und zu überprüfen, zu welchem Zeitpunkt (92, 93, 94) der Strom (80) einen Sollstrom (82) unterschreitet und ob dieser Zeitpunkt (92, 93, 94) außerhalb oder innerhalb eines Zeitfensters (90) liegt, wobei die Anordnung dazu ausgebildet ist, einen nachfolgenden Strompuls (101, 102, 103, 104, 105) über den Sollstrom (82) zu steuern, falls sich der Zeitpunkt (92, 93, 94) außerhalb des Zeitfensters (90) befindet, und den nachfolgenden Strompuls (101, 102, 103, 104, 105) über eine Einschaltzeit zu steuern, falls sich der Zeitpunkt (92, 93, 94) innerhalb des Zeitfensters (90) befindet.

9. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit, insbesondere in einer Anordnung (120) nach Anspruch 8, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 7 durchzuführen, wenn das Computerprogramm auf einem Computer oder einer entsprechenden Recheneinheit, insbesondere in einer Anordnung (120) nach Anspruch 8, ausgeführt wird.

## Claims

1. Method for operating an output stage for at least one piezoactuator (130), in which, when a current (80) for the piezoactuator (130) falls below a setpoint current (82) during an operating phase, a check is made to determine whether a time (92, 93, 94) at which the current falls below a setpoint current is outside or within a time window (90), with a subsequent current pulse (101, 102, 103, 104, 105, 106) being controlled by means of the setpoint current (82) if the time (92, 93, 94) is outside the time window (90), and with the subsequent current pulse (101, 102, 103, 104, 105, 106) being controlled by means of a switch-on time if the time (92, 93, 94) is within the time window (90).

2. Method according to Claim 1, in which a charge is linearly applied to the piezoactuator (130) with the current (80).

3. Method according to Claim 1 or 2, in which a response signal (86) is switched off and analogously a cylinder select switch is switched off if the time (92, 93, 94) is within the time window (90) and a time-controlled current pulse (101, 102, 103, 104, 105, 106) is terminated when the current falls below a zero current limit (84), it also being possible for a plurality of time-controlled current pulses to possibly be dropped, the number of said current pulses being fixedly defined.

4. Method according to one of the preceding claims, in which the time window (90) is at the end of an operating time of the operating phase.

5. Method according to one of the preceding claims, in which the switch-on time is dependent on a time interval (98) which is defined by the time (92, 93, 94) at which the current falls below a setpoint current (82) and the end of the time window (90).

6. Method according to one of the preceding claims, in which a length of the time window (90) of a use-specific integrated circuit is prespecified by means of a serial peripheral interface.

7. Method according to one of the preceding claims, which is carried out for an operating phase which is in the form of a charging phase and/or for an operating phase which is in the form of a discharging phase.

8. Arrangement for operating an output stage for at least one piezoactuator (130) which is designed to measure a current (80) for the piezoactuator (130) during an operating phase of the output stage, and to check the time (92, 93, 94) at which the current (80) falls below a setpoint current (82) and whether this time (92, 93, 94) is outside or within a time window (90), with the arrangement being designed to control a subsequent current pulse (101, 102, 103, 104, 105) by means of the setpoint current (82) if the time (92, 93, 94) is outside the time window (90), and to control the subsequent current pulse (101, 102, 103, 104, 105) by means of a switch-on time if the time (92, 93, 94) is within the time window (90).

9. Computer program having program code means, in order to carry out all the steps of a method according to one of Claims 1 to 7 when the computer program is run on a computer or a corresponding computer unit, in particular in an arrangement (120) according to Claim 8.

10. Computer program product having program code means which are stored on a computer-readable data storage medium, in order to carry out all the steps of a method according to one of Claims 1 to 7 when the computer program is run on a computer or a corresponding computer unit, in particular in an arrangement (120) according to Claim 8.

## Revendications

1. Procédé de conduite de l'étage final d'au moins un piézoactionneur (130) dans lequel si un courant (80) délivré au piézoactionneur (130) n'atteint pas un courant de consigne (82) pendant une phase de fonctionnement, on vérifie si l'instant (92, 93, 94) où ce courant de consigne n'est pas atteint est situé à l'extérieur ou à l'intérieur d'une fenêtre temporelle (90), une impulsion suivante de courant (101, 102, 103, 104, 105, 106) dépassant le courant de consigne (82) étant commandée au cas où l'instant (92, 93, 94) est situé à l'extérieur de la fenêtre temporelle (90) et l'impulsion suivante de courant (101, 102, 103, 104, 105, 106) étant commandée par l'intermédiaire d'une durée de branchement au cas où l'instant (92, 93, 94) est situé à l'intérieur de la fenêtre temporelle (90).

2. Procédé selon la revendication 1, dans lequel une charge est appliquée de manière linéaire sur le piézoactionneur (130) par le courant (80).

3. Procédé selon les revendications 1 ou 2, dans lequel un signal de réponse (86) est débranché et est débranché de manière similaire à un commutateur de sélection à cylindre au cas où l'instant (92, 93, 94) est situé à l'intérieur de la fenêtre temporelle (90) et dans lequel lorsqu'une limite (84) de courant nul n'est pas atteinte, une impulsion de courant (101, 102, 103, 104, 105, 106) commandée temporellement est interrompue, d'autres impulsions de courant à commande temporelle dont le nombre est défini fixement pouvant éventuellement être supprimées.

4. Procédé selon l'une des revendications précédentes, dans lequel la fenêtre temporelle (90) est située à la fin d'une durée de fonctionnement de la phase de fonctionnement.

5. Procédé selon l'une des revendications précédentes, dans lequel la durée de branchement dépend d'un intervalle de temps (98) défini par l'instant (92, 93, 94) auquel le courant de consigne (82) n'est pas atteint et la fin de la fenêtre temporelle (90).

6. Procédé selon l'une des revendications précédentes, dans lequel la longueur de la fenêtre temporelle (90) d'un circuit intégré spécifique à l'application est prédéterminée par une interface périphérique série.

7. Procédé selon l'une des revendications précédentes, exécuté pour une phase de fonctionnement configurée comme phase de charge et/ou pour une phase de fonctionnement configurée comme phase de décharge.

8. Ensemble de conduite de l'étage final d'au moins un piézoactionneur (130) configuré pour mesurer un courant (80) délivré au piézoactionneur (130) pendant une phase de fonctionnement de l'étage final et pour vérifier à quel instant (92, 93, 94) le courant (80) n'atteint pas un courant de consigne (82) et si cet instant (92, 93, 94) est situé à l'extérieur ou à l'intérieur d'une fenêtre temporelle (90), l'ensemble étant configuré pour commander une impulsion suivante de courant (101, 102, 103, 104, 105) dépassant le courant de consigne (82) au cas où l'instant (92, 93, 94) est situé à l'intérieur de la fenêtre temporelle (90) et pour commander l'impulsion de courant suivante (101, 102, 103, 104, 105) par l'intermédiaire d'une durée de branchement au cas où l'instant (92, 93, 94) est situé à l'intérieur de la fenêtre temporelle (90).

9. Programme informatique doté de moyens de code de programme qui permettent d'exécuter toutes les étapes d'un procédé selon l'une des revendications 1 à 7 lorsque le programme informatique est exécuté sur un ordinateur ou une unité de calcul appropriée, et en particulier sur un ensemble (120) selon la revendication 8.

10. Produit de programme informatique doté de moyens de code de programme conservés sur un support de données lisibles par ordinateur en vue d'exécuter toutes les étapes d'un procédé selon l'une des revendications 1 à 7 lorsque le programme informatique est exécuté sur un ordinateur ou une unité de calcul appropriée, en particulier sur un ensemble (120) selon la revendication 8.
